(19) Europäisches Patentamt
European Patent Office
Office européen des brevets

(11) EP 1 230 302 B1

(12) EUROPÄISCHE PATENTSCHRIFT

(45) Veröffentlichungstag und Bekanntmachung des Hinweises auf die Patenterteilung:
**25.01.2006 Patentblatt 2006/04**

(21) Anmeldenummer: **00964175.4**

(22) Anmeldetag: **15.09.2000**

(51) Int Cl.:
*C08L 69/00* (2006.01) *C08L 67/02* (2006.01)
*C08L 51/00* (2006.01)

(86) Internationale Anmeldenummer:
**PCT/EP2000/009015**

(87) Internationale Veröffentlichungsnummer:
**WO 2001/023474 (05.04.2001 Gazette 2001/14)**

# (54) POLYMERBLENDS ENTHALTEND MODIFIZIERTE POLYESTER

POLYMER BLENDS CONTAINING MODIFIED POLYESTERS

MELANGES POLYMERES CONTENANT DES POLYESTERS MODIFIES

(84) Benannte Vertragsstaaten:
**AT BE CH CY DE DK ES FI FR GB GR IE IT LI LU MC NL PT SE**

(30) Priorität: **28.09.1999 DE 19946323**

(43) Veröffentlichungstag der Anmeldung:
**14.08.2002 Patentblatt 2002/33**

(73) Patentinhaber: **Bayer MaterialScience AG**
**51368 Leverkusen (DE)**

(72) Erfinder:
- **WARTH, Holger**
  **41539 Dormagen (DE)**
- **WITTMANN, Dieter**
  **51375 Leverkusen (DE)**
- **ALBERTS, Heinrich**
  **51519 Odenthal (DE)**

(56) Entgegenhaltungen:
**US-A- 3 856 884**

- **PATENT ABSTRACTS OF JAPAN vol. 1997, no. 04, 30. April 1997 (1997-04-30) & JP 08 325444 A (MITSUBISHI CHEM CORP), 10. Dezember 1996 (1996-12-10)**
- **PATENT ABSTRACTS OF JAPAN vol. 017, no. 001 (C-1014), 5. Januar 1993 (1993-01-05) & JP 04 239529 A (TEIJIN LTD), 27. August 1992 (1992-08-27)**
- **DATABASE CHEMABS [Online] CHEMICAL ABSTRACTS SERVICE, COLUMBUS, OHIO, US; ANON.: "Poly(ethylene naphthalenedicarboxylate)/ polycarbonate blends" retrieved from STN Database accession no. 107:237778 XP002156621 & RES. DISCL. (1987), 283, 667-9,**
- **DATABASE CHEMABS [Online] CHEMICAL ABSTRACTS SERVICE, COLUMBUS, OHIO, US; NAKAMURA, YOSHITSUGU ET AL: "Polyester molding compositions with good color stability" retrieved from STN Database accession no. 84:60505 XP002156622 & JP 50 067355 A (TEIJIN, LTD., JAPAN) 6. Juni 1975 (1975-06-06)**
- **DATABASE CHEMABS [Online] CHEMICAL ABSTRACTS SERVICE, COLUMBUS, OHIO, US; UENO, MAKOTO ET AL: "Resin compositions to give molded articles with pearllike luster" retrieved from STN Database accession no. 82:141098 XP002156623 & JP 49 129748 A (TEIJIN CHEMICAL INDUSTRY CO., LTD.) 12. Dezember 1974 (1974-12-12)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 230 302 B1

## Beschreibung

Gegenstand der vorliegenden Erfindung sind Polymerblends, enthaltend modifizierte Polyester insbesondere mit verbesserten optischen Eigenschaften sowie deren Verwendung.

In der EP-A 0603664 werden z.B. Polymerblends beschrieben, die aus Polycarbonaten und ABS-Polymerisaten bestehen. Weitere Beispiele für Polymerblends enthaltend Polycarbonate sind in der JP-A10245481 und der EP-A 846729 zu finden.

Darüber hinaus werden Polycarbonate in Verbindung mit Pfropfpolymerisaten in der EP-A 0785234 beschrieben.

Daneben ist auch der Einsatz von Polymerblends bekannt, die Polyethylenterephthalate und Polyethylennaphthalate enthalten. Hauptanwendungsgebiete sind hierbei die Herstellung von Kunststoff-Flaschen mit verbesserten Eigenschaften. Dieses Thema wird zum Beispiel in den folgenden Übersichtsartikeln behandelt:

- E. Nunes, J. Agnelli, R. Rossi: Brazil. Polim. Tecnol. 8 (1998) 55-67
- M. Xanthos, H. Warth, S. Fakirov Ed., Transreactions in Condensation Polymers, Kap. 10, Wiley, 1999.

In der WO 9824844 ist ferner die Umesterungskontrolle in Polyethylenterephthalaten/Polyethylennaphthalat-Blends geschildert. Die UV-Eigenschaften von Flaschen werden ferner in JP-A 09302205 beschrieben.

US-A-3 856 884 beschreibt Gemische aus Polycarbonat mit Polybutylenterephthalat oder Polyhexamethylenterephthalat mit einem besonderen optischen Effekt.

In JP-A-08 325 444 werden Polymergemische offenbart, welche Polycarbonat und als Hauptkomponente Polyethylennaphthalat (PEN) oder ein PEN-Copolymerisat enthalten, jedoch kein Pfropfpolymerisat.

JP-A-50 067 355 beschreibt Formmassen auf der Basis von Polycarbonaten, als Hauptkomponente Polybutylennaphthalat oder Polybutylenterephthalat, und Propfpolymerisat.

Verbesserungsbedürftig sind vor allem bei Sichtteilen die optischen Eigenschaften insbesondere der Rohton und die Farbeffekte.

Aufgabe der vorliegenden Erfindung ist demgemäß, Polymerblends zur Verfügung zu stellen, die eine Farbverbesserung, Rohtonverbesserung (Rohtonaufhellung) und ein verbessertes Verarbeitungsverhalten beispielsweise bei der Herstellung von dünnwandigen Teilen aufweisen.

Diese Aufgabe wird erfindungsgemäß gelöst durch Polymerblends enthaltend Poly-(ester)carbonat A, Pfropfpolymerisat B, Polyethylennaphthalat C1 oder Polyethylennaphthalat-co-terephthalat C2 sowie gegebenenfalls als weitere Komponente D Vinyl(co)polymerisat.

Erfindungsgemäße Polymerblends enthalten

a) 60 bis 65 Gew.-Teile eines Poly(ester)carbonat (A)
b) 13 bis 20 Gew.-Teile eines Pfropfpolymerisat (B) und
c) entweder 5 bis 20 Gew.-Teile eines Polyethylennaphthalats (C1) oder 5 bis 20 Gew.-Teile eines Polyethylennaphthalat-co-terephthalats (C2),
d) 0 bis 17 Gew.-Teile eines Vinylcopolymerisats,

wobei sie Summe der Gewichtsteile der Komponenten A + B + C + D 100 ergibt.

Ferner betrifft die vorliegende Erfindung auch die Verwendung der Polymerblends zur Herstellung von Formkörpern.

## Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-A 1 495 626, DE-A 2 232 877, DE-A 2 703 376, DE-A 2 714 544, DE-A 3 000 610, DE-A 3 832 396; zur Herstellung aromatischer Polyestercarbonate z.B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielseise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I)

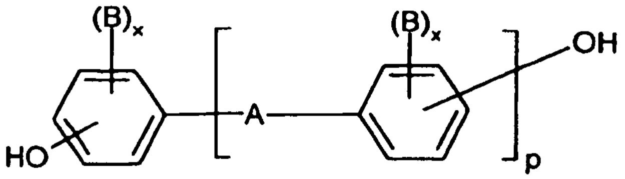

(I)

wobei

A eine Einfachbindung, $C_1$-$C_5$-Alkylen, $C_2$-$C_5$-Alkyliden, $C_5$-$C_6$-Cycloalkyliden, -O-, -SO-, -CO-, -S-, -$SO_2$-, $C_6$-$C_{12}$-Arylen, an das weitere aromatische gegebenenfalls Heteroatome enthaltende Ringe kondensiert sein können,
oder ein Rest der Formel (II) oder (III)

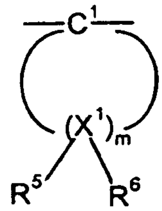

(II)

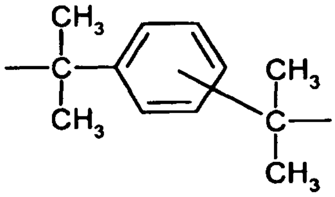

(III)

B jeweils Wasserstoff, $C_1$-$C_{12}$-Alkyl, vorzugsweise Methyl, Halogen, vorzugsweise Chlor und/oder Brom,

x jeweils unabhängig voneinander 0, 1 oder 2,

p 1 oder 0 sind, und

$R^5$ und $R^6$ für jedes $X^1$ individuell wählbar, unabhängig voneinander Wasserstoff oder $C_1$-$C_6$-Alkyl, vorzugsweise Wasserstoff, Methyl oder Ethyl,

$X^1$ Kohlenstoff und

m eine ganze Zahl von 4 bis 7, bevorzugt 4 oder 5 bedeuten, mit der Maßgabe, dass an mindestens einen Atom $X^1$, $R^5$ und $R^6$ gleichzeitig Alkyl sind.

Bevorzugte Diphenole sind Hydrochinon, Resorcin, Dihydroxydiphenole, Bis-(hydroxyphenyl)-$C_1$-$C_5$-alkane, Bis-(hydroxyphenyl)-$C_5$-$C_6$-cycloalkane, Bis-(hydroxyphenyl)-ether, Bis-(hydroxylphenyl)-sulfoxide, Bis-(hydroxyphenyl)-ketone, Bis-(hydroxyphenyl)-sulfone und $\alpha,\alpha$-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis(4-hydroxyphenyl)-3.3.5-trimethylcyclohexan, 4,4'-Dihydroxydiphenylsulfid, 4,4'-Dihydroxydiphenyl-sulfon sowie deren di- und tetrabromierten oder chlorierten Derviate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate sind geeignete Kettenabbrecher beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im Allgemeinen zwischen 0,5 Mol-%, und 10 Mol-%, bezogen auf die Molsumme der jeweils eingesetzten Diphenole.

Die thermoplastischen, aromatischen Polycarbonate haben mittlere Gewichtsmittelmolekulargewichte ($M_w$, gemessen z.B. durch Ultrazentrifuge oder Streulichtmessung) von 10 000 bis 200 000, vorzugsweise 20 000 bis 80 000.

Die thermoplastischen, aromatischen Polycarbonate können in bekannter Weise verzweigt sein, und zwar vorzugsweise durch den Einbau von 0,05 bis 2,0 Mol-%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.-%, vorzugsweise 2,5 bis 25 Gew.% (bezogen auf die Gesamtmenge an einzusetzenden Diphenolen) Polydiorganosiloxane mit Hydroxy-aryloxy-Endgruppen eingesetzt werden. Diese sind bekannt (s. beispielseise US-Patent 3 419 634) bzw. nach literaturbekannten Verfahren herstellbar. Die Herstellung Polydiorganosiloxanhaltiger Copolycarbonate wird z.B. in DE-OS 3 334 782 beschrieben.

Bevorzugte Polycarbonate sind neben den Bisphenol-A-Homopolycarbonaten die Copolycarbonate von Bisphenol-A mit bis zu 15 Mol-%, bezogen auf die Molsummen an Diphenolen, anderen als bevorzugt bzw. besonders bevorzugt genannten Diphenole, insbesondere 2,2-Bis(3,5-dibrom-4-hydroxyphenyl)-propan.

Aromatische Dicarbonsäuredihalogenide zur Herstellung von aromatischen Polyestercarbonate sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen als bifunktionelles Säurederivat mitverwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch $C_1$-$C_{22}$-Alkylgruppen oder durch Halogenatome substituiert sein können, sowie aliphatische $C_2$-$C_{22}$-Monocarbonsäurechloride in Betracht.

Die Menge an Kettenabbrechern beträgt jeweils 0,1 bis 10 Mol-%, bezogen im Falle der phenolischen Kettenabbrecher auf Mole Diphenole und Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu ebenfalls DE-A 2 940 024 und DE-A 3 007 934).

Als Verzweigungsmittel können beispielsweise 3- oder mehrfunktionelle Carbonsäurechloride, wie Trimesinsäuretrichlorid, Cyanursäuretrichlorid; 3,3',4,4'-Benzophenontetracarbonsäuretetrachlorid, 1,4,5,8-Napthalintetracarbonsäuretetrachlorid oder Pyromellithsäuretetrachlorid, in Mengen von 0,01 bis 1,0 Mol-% (bezogen auf eingesetzte Dicarbonsäuredichloride) oder 3- oder mehrfunktionelle Phenole, wie Phloroglucin, 4,6-Dimethyl-2,4,6-tri-(4-hydroxyphenyl)-hepten, 2,4,4-Dimethyl-2,4-6-tri-(4-hydroxyphenyl)-heptan, 1,3,5-Tri-(4-hydroxyphenyl)-benzol, 1,1,1 -Tri-(4-hydroxyphenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methyl-phenol, 2-(4-Hydroxyphenyl)-2-(2,4-dihydroxyphenyl)-propan, Tetra-(4-[4-hydroxyphenyl-isopropyl]-phenoxy)-methan, 1,4-Bis[4,4'-dihydroxytri-phenyl)-methyl]-benzol, in Mengen von 0,01 bis 1,0 Mol-%, bezogen auf eingesetzte Diphenole, verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol-%, insbesondere bis zu 80 Mol-%, besonders bevorzugt bis zu 50 Mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität ($\eta_{rel}$) der aromatischen Polycarbonate und aromatischen Polyestercarbonate liegt im Bereich 1,18 bis 1,4, vorzugsweise 1,22 bis 1,3 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch untereinander eingesetzt werden.

## Komponente B

Das kautschukmodifizierte Pfropfpolymerisat B umfasst ein statistisches (Co)polymerisat aus Monomeren gemäß B.1.1 und/oder B.1.2, sowie einem mit dem statistischen (Co)polymerisat aus B.1.1 und/oder B.1.2 gepfropften Kautschuk B.2, wobei die Herstellung von B in bekannter Weise nach einem Masse- oder Lösungs- oder Masse-Suspensions-Polymerisationsverfahren erfolgt, wie z.B. in den US-A-3 243 481, US-A-3 509 237, US-A-3 660 535, US-A-4 221 833 und US-A-4 239 863 beschrieben.

Beispiele für Monomere B.1.1 sind Styrol, α-Methylstyrol, halogen- oder alkylkemsubstituierte Styrole wie p-Methylstyrol, p-Chlorstyrol, (Meth)acrylsäure-$C_1$-$C_8$-alkylester wie Methylmethacrylat, n-Butylacrylat und t-Butylacrylat. Beispiele für Monomere B.1.2 sind ungesättigte Nitrile wie Acrylnitril, Methacrylnitril, (Meth)-Acrylsäure-$C_1$-$C_8$-alkylester wie Methylmethacrylat, n-Butylacrylat, t-Butylacrylat, Derivate (wie Anhydride und Imide) ungesättigter Carbonsäuren wie Maleinsäureanhydrid und N-Phenyl-maleinimid oder Mischungen davon.

Bevorzugte Monomere B.1.1 sind Styrol, α-Methylstyrol und/oder Methylmethacrylat, bevorzugte Monomere B.1.2 sind Acrylnitril, Maleinsäureanhydrid und/oder Methylmethacrylat.

Besonders bevorzugte Monomere sind B.1.1 Styrol und B.1.2 Acrylnitril.

Für die kautschukmodifizierten Pfropfpolymerisate B geeignete Kautschuke B.2 sind beispielsweise Dienkautschuke, EP(D)M-Kautschuke, also solche auf Basis Ethylen/Propylen und gegebenenfalls Dien, Acrylat-, Polyurethan-, Silikon-, Chloropren- und Ethylen/Vinylacetat-Kautschuke.

Bevorzugte Kautschuke B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb 10°C, vorzugsweise unterhalb -10°C liegt. Besonders bevorzugt wird reiner Polybutadienkautschuk.

Die Komponente B kann, falls erforderlich und wenn dadurch die Kautschukeigenschaften der Komponente B.2 nicht beeinträchtigt werden, zusätzlich noch geringe Mengen, üblicherweise weniger als 5 Gew.-%, vorzugsweise weniger als 2 Gew.-%, bezogen auf B.2, vernetzend wirkender ethylenisch ungesättigter Monomeren enthalten. Beispiele für solche vernetzend wirkenden Monomere sind Alkylendiol-di-(meth)-acrylate, Polyester-di-(meth)-acrylate, Divinylbenzol, Trivinylbenzol, Triallylcyanurat, Allyl-(meth)-acrylat, Diallylmaleat und Diallylfumarat.

Das kautschukmodifizierte Pfropfpolymerisat B wird erhalten durch Pfropfpolymerisation von 50 bis 99, bevorzugt 65 bis 98, besonders bevorzugt 75 bis 95 Gew.-Teilen eines Gemischs aus 50 bis 99, bevorzugt 60 bis 95 Gew.-Teilen Monomeren gemäß B.1.1 und 1 bis 50, bevorzugt 5 bis 40 Gew.-Teilen Monomeren gemäß B.1.2 in Gegenwart von 1 bis 50, vorzugsweise 2 bis 35, besonders bevorzugt 5 bis 25 Gew.-Teilen der Kautschukkomponente B.2, wobei die Pfropfpolymerisation nach einem Masse- oder Lösungs- oder Masse-Suspensions-Polymerisationsverfahren durchgerührt wird.

Wesentlich bei der Herstellung der kautschukmodifizierten Pfropfpolymerisate B ist, dass die Kautschukkomponente B.2 vor der Pfropfpolymerisation im Gemisch der Monomeren B.1.1 und/oder B.1.2 in gelöster Form vorliegt. Die Kautschukkomponente B.2 darf also weder so stark vernetzt sein, dass eine Lösung in B.1.1 und/oder B.1.2 unmöglich wird, noch darf B.2 zu Beginn der Pfropfpolymerisation bereits in Form diskreter Teilchen vorliegen. Die für die Produkteigenschaften von B wichtige Teilchenmorphologie und zunehmende Vernetzung von B.2 bildet sich erst im Verlauf der Pfropfpolymerisation aus (siehe hierzu beispielsweise Ullmann, Encyclopädie der technischen Chemie, Band 19, S. 284 ff., 4. Auflage 1980).

Das statistische Copolymerisat aus B.1.1 und B.1.2 liegt üblicherweise im Polymerisat B zu einem Teil auf dem Kautschuk B.2 auf oder eingepfropft vor, wobei dieses Pfropfmischpolymerisat diskrete Teilchen im Polymerisat B ausbildet. Der Anteil des auf- oder eingepfropften Copolymerisats aus B.1.1 und B.1.2 am gesamten Copolymerisat aus B.1.1 und B.1.2 - also die Pfropfausbeute (= Gewichtsverhältnis der tatsächlich gepfropften Pfropfmonomeren zu den insgesamt verwendeten Pfropfmonomeren x 100, angegeben in %) - sollte dabei 2 bis 40 %, vorzugsweise 3 bis 30 %, besonders bevorzugt 4 bis 20 % betragen.

Der mittlere Teilchendurchmesser der resultierenden gepfropften Kautschukteilchen (ermittelt durch Auszählung an elektronenmikroskopischen Aufnahmen) liegt im Bereich von 0,5 bis 5 μm, vorzugsweise 0,8 bis 2,5 μm.

Neben der über Masse-Polymerisation hergestellten Pfropfpolymerisate können die erfindungsgemäßen Formmassen auch über Emulsionspolymerisation hergestelltes Pfropfpolymerisat enthalten. Die Beschreibung der Pfropfpolymerisate entspricht vorzugsweise derjenigen der über Massepolymerisation hergestellten, sind jedoch mittels Emulsionspolymerisation hergestellt.

Der mittlere Teilchendurchmesser ($d_{50}$-Wert) der Pfropfgrundlage im Emulsionspfropfpolymerisat beträgt im Allgemeinen 0,05 bis 5 μm, vorzugweise 0,10 bis 0,5 μm besonders bevorzugt 0,20 bis 0,40 μm. Der Gelanteil der Pfropfgrundlage beträgt mindestens 30 Gew.-%, vorzugsweise mindestens 40 Gew.-%.
Das ABS-Pfropfpolymer ist besonders bevorzugtes "Emulsions-Pfropfpolymer".
Das Gewichtsverhältnis von mittels Massepolymerisation hergestelltes Pfropfpolymer gemäß Komponente B der vorliegenden Erfindung zu dem mittels Emulsionspolymerisation hergestellten Pfropfpolymer beträgt 100:0 bis 50:50, vorzugsweise 80:20 bis 60:40.

## Komponente C

Als Komponente C werden Polyethylennaphthalate (C1) oder Polyethylennaphthalat-co-terephthalate (C2) eingesetzt (vgl. z.B. EP-A-0846729). Hierbei handelt es sich um einen Polyester, dessen Eigenschaften ähnlich denen der Polyalkylenterephthalate sind.
Bei den Polyethylennaphthalaten (C1) oder Polyethylennaphthalat-co-terephthalaten (C2) der Komponente C handelt es sich um Reaktionsprodukte der ggf. substituierten Naphtalindicarbonsäure oder ihren reaktionsfähigen Derivaten, wie Dimethylestern oder Anhydriden, mit Ethylenglykol. Beispiele für Substituenten an der Naphtalindicarbonsäure sind Alkylgruppen mit 1 bis 4 Kohlenstoffatomen, Alkylarylgruppen sowie Halogene.
Die Polyethylennaphthalate (C1) oder Polyethylennaphthalat-co-terephthalate (C2) können durch Einbau relativ kleiner Mengen 3- oder 4-wertiger Alkohole oder 3- oder 4-basischer Carbonsäuren, z.B. gemäß DE-A 1 900 270 und US-A 3 692 744, verzweigt werden. Beispiele bevorzugter Verzweigungsmittel sind Trimesinsäure, Trimellithsäure, Trimethylolethan und -propan und Pentaerythrit.
Besonders bevorzugt sind Polyethylennaphthalate (C1) oder Polyethylennaphthalat-co-terephthalate (C2), die allein aus Naphthalindicarbonsäure und deren reaktionsfähigen Derivaten (z.B. deren Dialkylestem) und Ethylenglykol hergestellt worden sind.
Die vorzugsweise verwendeten Polyethylennaphthalate (C1) oder Polyethylennaphthalat-co-terephthalate (C2) besitzen im Allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.
Die Polyethylennaphthalate (C1) oder Polyethylennaphthalat-co-terephthalate (C2) lassen sich nach bekannten Methoden herstellen.

## Komponente D

Erfindungsgemäß einsetzbare Vinyl-(Co)polymerisate gemäß Komponente D sind solche aus wenigstens einem Monomeren aus der Reihe: Styrol, α-Methylstyrol und/oder kernsubstituierten Styrolen, $C_1$-$C_8$-Alkylmethacrylat, $C_1$-$C_8$-Alkylacrylat (D.1.1) mit wenigstens einem Monomeren aus der Reihe: Acrylnitril, Methacrylnitril, $C_1$-$C_8$-Alkylmethacrylat, $C_1$-$C_8$-Alkylacrylat, Maleinsäureanhydrid und/oder N-substituierte Maleinimide (D.1.2).
$C_1$-$C_8$-Alkylacrylate bzw. $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylsäureester wird Methylmethacrylat genannt.
Thermoplastische (Co)polymerisate mit einer Zusammensetzung gemäß Komponente D1 können bei der Pfropfpolymerisation zur Herstellung der Komponente B als Nebenprodukt entstehen, besonders dann, wenn große Mengen Monomere auf kleine Mengen Kautschuk gepfropft werden. Die erfindungsgemäß einzusetzende Menge an (Co)polymerisat D1 bezieht diese Nebenprodukte der Pfropfpolymerisation nicht mit ein.
Die (Co)polymerisate gemäß Komponente D sind harzartig, thermoplastisch und kautschukfrei.
Die thermoplastischen (Co)polymerisate D enthalten 50 bis 99, vorzugsweise 60 bis 95 Gew.-Teile D.1.1 und 50 bis 2, vorzugsweise 40 bis 5 Gew.-Teile D.1.2.
Besonders bevorzugte (Co)polymerisate D sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methylmethacrylat.
Die Styrol-Acrylnitril-Copolymerisate gemäß Komponente D sind bekannt und lassen sich durch radikalische Polymerisation, insbesondere durch Emulsions-, Suspensions-, Lösungs- oder Massepolymerisation herstellen. Die Copolymerisate gemäß Komponente D besitzen vorzugsweise Molekulargewichte $\bar{M}_w$ (Gewichtsmittel, ermittelt durch Lichtstreuung oder Sedimentation) zwischen 15 000 und 200000.
Besonders bevorzugte erfindungsgemäße Copolymerisate D sind auch statistisch aufgebaute Copolymerisate aus Styrol und Maleinsäureanhydrid, die durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Die Molekulargewichte (Zahlenmittel $\bar{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60 000 bis 200 000. Bevorzugt ist für diese Produkte eine Grenzviskosität von 0,3 bis 0,9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinyl(Co)polymerisate D auch kernsubstituierte Styrole wie p-Methylstyrol, Vinyltoluol, 2,4-Dimethylstyrol und andere substituierte Styrole wie α-Methylstyrol, die gegebenenfalls substituiert sein können, enthalten.

## Additive

Die erfindungsgemäßen Polymerblends können übliche Additive, wie Flammschutzmittel, Anti-Dripping-Mittel, feinstteilige anorganische Verbindungen, Gleit- und Entformungsmittel, Nukleierungsmittel, Antistatika, Stabilisatoren, Füll- und Verstärkungsstoffe sowie Farbstoffe und Pigmente enthalten.

Die erfindungsgemäßen Polymerblends können im Allgemeinen 0,01 bis 20 Gew.-%, bezogen auf die Gesamt-Masse, Flammschutzmittel enthalten. Beispielhaft werden als Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg- Al-hydroxid, anorganische Verbindungen wie Aluminiumoxide, Titandioxide, Antimonoxide, Barium-metaborat, Hydroxoantimonat, Zirkon-oxid, Zirkon-hydroxid, Molybdenoxid, Ammoniummolybdat, Zinnborat, Ammoniumborat, Bariummetaborat und Zinnoxid sowie Siloxanverbindungen genannt.

Als Flammschutzverbindungen können ferner Phosphorverbindungen, wie sie in EP-A 0363608, EP-A 0345522 oder EP-A 0640655 beschrieben sind, eingesetzt werden.

Solche Phosphorverbindungen sind beispielsweise Phosphor-Verbindungen der Formel (IV)

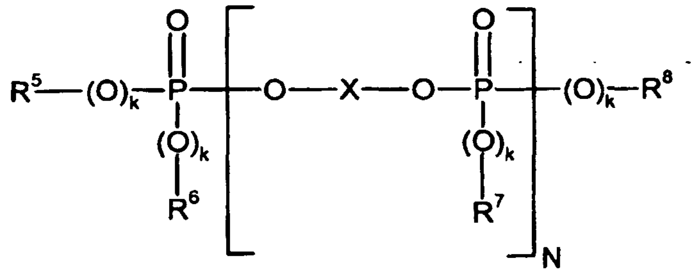

(IV),

in welcher
R5, $R^6$, $R^7$ und $R^8$, unabhängig voneinander jeweils gegebenenfalls halogeniertes $C_1$-$C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$-$C_6$-Cycloalkyl, $C_6$-$C_{30}$-Aryl oder $C_7$-$C_{12}$-Aralkyl bedeuten.

Bevorzugt stehen $R^5$, $R^6$, $R^7$ und $R^8$ unabhängig voneinander für $C_1$-$C_4$-Alkyl, Phenyl, Naphthyl oder Phenyl-$C_1$-$C_4$-alkyl. Die aromatischen Gruppen $R^5$, $R^6$, $R^7$ und $R^8$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (IV) bedeutet einen ein- oder mehrkernigen aromatischen Rest mit 6 bis 30 C-Atomen. Dieser leitet sich von Diphenolen ab wie z.B. Diphenylphenol, Bisphenol A, Resorcin oder Hydrochinon oder deren chlorierten oder bromierten Derivaten.

k in der Formel (IV) kann, unabhängig voneinander, 0 oder 1 sein, vorzugsweise ist k gleich 1.

N steht für Werte von 0 bis 30, vorzugsweise für 0 bzw. einen durchschnittlichen Wert von 0,3 bis 20, besonders bevorzugt 0,5 bis 10, insbesondere 0,5 bis 6.

Mischungen aus Phosphorverbindungen der Formel (IV) enthalten vorzugsweise 10 bis 90 Gew.%, vorzugsweise 12 bis 40 Gew.%, wenigstens einer Monophosphorverbindung der Formel (IV) und wenigstens einer oligomeren Phosphorverbindung beziehungsweise eines Gemisches von oligomeren Phosphorverbindungen in Mengen von 10 bis 90 Gew.-%, vorzugsweise 60 bis 88 Gew.%, bezogen auf die Gesamtmenge an Phosphorverbindungen, eingesetzt.

Monophosphorverbindungen der Formel (IV) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Mischungen aus Monomeren und oligomeren Phosphorverbindungen der Formel (IV) weisen durchschnittliche N-Werte von 0,3 bis 20, bevorzugt 0,5 bis 10, insbesondere von 0,5 bis 6 auf.

Die Phosphorverbindungen gemäß Formel (IV) sind bekannt (vgl. z.B. EP-A 0363608, EP-A 0640655, EP-A 0542522) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die erfindungsgemäßen Polymerblends können gegebenenfalls von Verbindungen der Formel (IV) verschiedene Flammschutzmittel in einer Menge bis zu 20 Gew.-Teilen enthalten. Bevorzugt sind synergistisch wirkende Flammschutzmittel. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze oder Siloxanverbindungen genannt. Die erfindungsgemäßen Polymerblends können gegebenenfalls von den anorganischen Verbindungen abweichende anorganische Substanzen enthalten wie beispielsweise anorganische Hydroxidverbindungen wie Mg-, Al-hydroxid, anorganische Verbindungen wie Aluminiumoxid, Antimonoxide, Bariummetaborat, Hydroxoantimonat, Zirkoniumoxid, Zirkonhydroxid, Molybdänoxid, Ammoniummolybdat, Zinkborat, Ammoniumborat, Bariummetaborat und Zinnoxid.

Ferner können die erfindungsgemäßen thermoplastischen Polymerblends feinstteilige anorganische Verbindungen enthalten, die sich günstig auf die Flammschutzeigenschaften der erfindungsgemäßen Polymerblends auswirken. Diese anorganischen Verbindungen umfassen Verbindungen eines oder mehrerer Metalle der 1. bis 5. Hauptgruppe oder der 1. bis 8. Nebengruppe des Periodensystems, bevorzugt der 2. bis 5. Hauptgruppe oder der 4. bis 8. Nebengruppe, besonders bevorzugt der 3. bis 5. Hauptgruppe oder der 4. bis 8. Nebengruppe mit den Elementen Sauerstoff, Schwefel, Bor, Phosphor, Kohlenstoff, Stickstoff, Wasserstoff und/oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$,WC, ZnO, $Al_2O_3$, AlO(OH), $ZrO_2$, $Sb_2O_3$, $SiO_2$, Eisenoxide, $NaSO_4$, $BaSO_4$, Vanadiumoxide, Zinkborat, Silicate wie Al-Silikate, Mg-Silikate, ein, zwei, dreidimensionale Silikate, Mischungen und dotierte Verbindungen sind ebenfalls verwendbar. Des Weiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Die thermoplastischen Polymerblends können anorganische Füll- und Verstärkungsmaterialien wie Glasfasern, gegebenenfalls geschnitten oder gemahlen, Glasperlen, Glaskugeln, blättchenförmiges Verstärkungsmaterial, wie Kaolin, Talk, Glimmer, Silicate, Quarz, Talkum, Titandioxid, Wollastonit, Mika, Kohlefasem oder deren Mischung enthalten. Vorzugsweise werden als Verstärkungsmaterial geschnittene oder gemahlene Glasfasern eingesetzt. Bevorzugte Füllstoffe, die auch verstärkend wirken können sind Glaskugeln, Glimmer, Silikate, Quarz, Talkum, Titandioxid, Wollastonit

Die gefüllten bzw. verstärkten Polymerblends können bis zu 60, vorzugsweise 10 bis 40 Gew.-%, bezogen auf die gefüllte bzw. verstärkte Formmasse, Füll- und/oder Verstärkungsstoffe enthalten.

Weiterhin können fluorierte Polyolefine zugesetzt werden. Die fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.%, mittlere Teilchendurchmesser $d_{50}$ von 0,05 bis 1 000 $\mu$m, vorzugsweise

0,08 bis 20 μm. Im Allgemeinen haben die fluorierten Polyolefine E eine Dichte von 1,2 bis 2,3 g/cm³.

Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate.

Die fluorierten Polyolefine sind bekannt (vgl. EP-A 0640655).

Erfindungsgemäß werden die fluorierten Polyolefine E in Form spezieller Zubereitungen eingesetzt:

als koagulierte Mischung mit mindestens einer der Komponenten A bis C, wobei das fluorierte Polyolefin E bzw. Polyolefingemisch als Emulsion mit mindestens einer Emulsion der Komponenten A bis C gemischt und anschließend koaguliert wird

oder

als Präcompound mit mindestens einer der Komponenten A bis C, wobei die fluorierten Polyolefine E als Pulver mit einem Pulver oder einem Granulat mindestens einer der Komponenten A bis C vermischt und in der Schmelze, im Allgemeinen bei Temperaturen von 208°C bis 330°C in den üblichen Aggregaten wie Innenkneter, Extruder oder Doppelwellenschnecken, compoundiert wird.

Geeignete Tetrafluorethylenpolymerisat-Emulsionen sind handelsübliche Produkte und werden beispielsweise von der Firma DuPont als Teflon® 30 N angeboten.

Die Erfindung umfasst auch ein Verfahren zur Herstellung der Polymerblends.

Die erfindungsgemäßen Polymerblends, enthaltend Komponenten A bis E, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert, wobei die fluorierten Polyolefine vorzugsweise in Form der bereits erwähnten koagulierten Mischung eingesetzt werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Polymerblends der vorliegenden Erfindung können zur Herstellung von Formkörpern jeder Art verwendet werden. Insbesondere können Formkörpern durch Spritzguss hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, wie Computer, Drucker, Monitore oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Polymerblends zur Herstellung von dünnwandigen Formteilen (z.B. Datentechnik-Gehäuseteile), wo besonders hohe Ansprüche an Kerbschlagzähigkeit und Spannungsrissbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

Im Folgenden wird die Erfindung anhand einiger Beispiele näher erläutert.

1. Definition der verwendeten Substanzen

| Komponente | Bezeichnung |
|---|---|
| A1 | Lineares Polycarbonat auf Basis Bisphenol A mit einer relativen Lösungsviskosität von 1,26 gemessen in $CH_2Cl_2$ als Lösungsmittel bei 25°C und in einer Konzentration von 0,5 g/100ml |
| B1 | Pfropfpolymerisat von 40 Gew.-Teilen eines Copolymerisats aus Styrol und Acrylnitril im Verhältnis von 73:27 auf 60 Gew.-Teile teilchenförmig vernetztem Polybutadienkautschuk (mittlerer Teilchendurchmesser $d_{50}$=0,28 μm), hergestellt durch Emulsionspolymerisation |
| C1 | Polyethylennaphthalat mit einer Vicat B 120 (ISO 306) Temperatur von 118°C und einer Schmelzvolumenrate (ISO 1133 270°C, 5kg) von 12,1 cm³/10 min |
| C2 | Polyethylennaphthalat-co-terephthalat mit einer Vicat B120 (ISO 306) Temperatur von 114°C und einer Schmelzvolumenrate (ISO 1133, 270°C, 5kg) von 10,7 cm³/10 min |
| D1 | Styrol/Acrylnitril-Copolymerisat mit einem Styrol/Acrylnitril-Verhältnis von 72:28 und einer Grenzviskosität von 0,55 dl/g (Messung in Dimethylformamid bei 20°C) |
| E | Pentaeritrittetrastearat |

Die Bestimmung der Zugfestigkeit erfolgt nach ISO 527.

Die Bestimmung der Reißdehnung erfolgt nach ISO 527.

Die Bestimmung der Schmelzvolumenrate erfolgt nach ISO 1133.

Der Rohton wurde visuell beurteilt. Ausgehend vom Vergleichsbeispiel als Kontrolle (Wert "0") wurde die Aufhellung (+, ++) der erfindungsgemäßen Beispiele beurteilt.

2. Tabellen

Tab. 1: Formmassen und ihre Eigenschaften

| | Vergleich | Erfindungsgemäß 1 | Erfindungsgemäß 2 |
|---|---|---|---|
| A1 Gew.-Teile | 70 | 65 | 65 |
| B1 Gew.-Teile | 13 | 13 | 13 |
| C1 Gew.-Teile | - | 5 | - |
| C2 Gew.-Teile | - | - | 5 |
| D1 Gew.-Teile | 17 | 17 | 17 |
| E Gew.-Teile | 0,5 | 0,5 | 0,5 |
| Kerbschlagzähigkeit Izod 23°C kJ/$m^2$ | 56 | 55 | 55 |
| Kritische Temp. °C | <-30 | <-30 | <-30 |
| Schmelzvolumenrate $cm^3$/10 min. | 8,6 | 10,7 | 13,3 |
| Zugfestigkeit MPa | 2180 | 2183 | 2187 |
| Reißdehnung % | 88 | 122 | 123 |
| Rohton (visuelle Beurteilung) | 0 | + | + |

Die erfindungsgemäßen Formmassen zeichnen sich durch eine günstige Eigenschaftskombination aus verbesserter Fließfähigkeit, mechanischen Eigenschaften und Rohton aus. Überraschenderweise werden durch die gegenüber dem Stand der Technik hinzugefügten Komponenten C1 bzw. C2 der Rohton deutlich verbessert, wobei im Gegensatz zu Farbpigmenten die mechanischen Eigenschaften sich zusätzlich noch verbessern. Auch nimmt die Fließfähigkeit, hier in Form der Schmelzvolumenrate, zu.

Tab. 2: Formmassen und ihre Eigenschaften

| | Vergleich | Erf.3 | Erf.4 | Erf.5 | Erf.6 |
|---|---|---|---|---|---|
| A1 Gew. -Teile | 60 | 60 | 60 | 60 | 60 |
| B1 Gew.-Teile | 20 | 20 | 20 | 20 | 20 |
| C1 Gew.-Teile | - | 20 | 10 | - | - |
| C2 Gew.-Teile | - | - | - | 20 | 10 |
| D1 Gew.-Teile | 20 | - | 10 | - | 10 |
| E Gew.-Teile | 0,5 | 0,5 | 0,5 | 0,5 | 0,5 |
| Kerbschlagzähigkeit (Izod 23 °C) kJ/$m^2$ | 56 | 51 | 59 | 59 | 55 |
| Kritische Temp. °C | <-30 | <-30 | <-30 | <-30 | <-30 |
| Vicat-Temp. VSTB 120 ISO306 °C | 122 | 130 | 127 | 125 | 128 |
| Reißdehnung % | 115 | 115 | 117 | 116 | 117 |
| Rohton (visuelle Beurteilung) | 0 | ++ | + | ++ | + |

Die erfindungsgemäßen Formmassen zeichnen sich durch eine günstige Eigenschaftskombination mechanischer und thermischer Eigenschaften sowie des Rohtons aus. Überraschenderweise werden durch die gegenüber dem Stand der Technik hinzugefügten Komponenten C1 bzw. C2 der Rohton deutlich verbessert und zwar unter Erhalt bzw. Verbesserung der mechanischen Eigenschaften, wie Kerbschlagzähigkeit und Reißdehnung. Zusätzlich läßt sich eine für viele Anwendungen vorteilhafte Erhöhung der Vicat-Temperatur erzielen.

Die erfindungsgemäben Formmassen weisen einen sehr schönen Perlglanzeffekt auf. Unter Beibehaltung der Kerbschlagzähigkeit und Verbesserung der Reißdehnung konnten aus dem Material erfolgreich Gehäuse für Mobiltelefone hergestellt werden.

**Patentansprüche**

**1.** Polymerblends enthaltend

a) 60 bis 65 Gew.-Teile eines Poly(ester)carbonat (A)
b) 13 bis 20 Gew.-Teile eines Pfropfpolymerisat (B) und
c) entweder 5 bis 20 Gew.-Teile eines Polyethylennaphthalats (C1) oder 5 bis 20 Gew.-Teile eines Polyethylennaphthalat-co-terephthalats (C2).
d) 0 bis 17 gew.-Teile eines Vinylcopolymerisats, (D), wobei die Summe der gewichtsteile der Komponenten A+B+C+D 100 ergibt.

**2.** Polymerblends nach Anspruch 1 enthaltend Poly(ester)carbonat A, Polyethylennaphthalat C1 oder Polyethylennaphthalat-co-terephthalat (C2) und Pfropfpolymerisat B, wobei der mittlere Teilchendurchmesser $d_{50}$ des Pfropfpolymerisats 0,5 bis 5 µm beträgt.

**3.** Polymerblends nach Anspruch 2, wobei der mittlere Teilchendurchmesser $d_{50}$ des Pfropfpolymerisats 0,5 bis 2,5 um beträgt.

**4.** Polymerblends nach einem der Ansprüche 2 oder 3, wobei der mittlere Teilchendurchmesser $d_{50}$ der Pfropfgrundlage 0,1 bis 0,5 µm beträgt.

**5.** Polymerblends nach einem der Ansprüche 1 bis 4, enthaltend als Komponente D) Vinylcopolymerisat.

**6.** Polymerblends nach einem der Ansprüche 1 bis 5, **dadurch gekennzeichnet, dass** die Pfropfgrundlage des Pfropfpolymerisats B ausgewählt ist aus mindestens einem Kautschuk aus der Gruppe der Dienkautschuke, EP(D)M-Kautschuke, Acrylat-, Polyurethan-, Silikon-, Chloropren- und Ethylen/Vinylacetat-Kautschuke.

**7.** Polymerblends nach einem der Ansprüche 1 bis 6, **dadurch gekennzeichnet, dass** sie mindestens einen Zusatz aus der Gruppe der Flammschutzmittel, Stabilisatoren, Pigmente, Entformungsmittel, Fließhilfsmittel und/oder Antistatika enthalten.

**8.** Polymerblends nach Anspruch 7, **dadurch gekennzeichnet, dass** sie als Flammschutzmittel Phosphate gemäß Formel (IV) enthalten

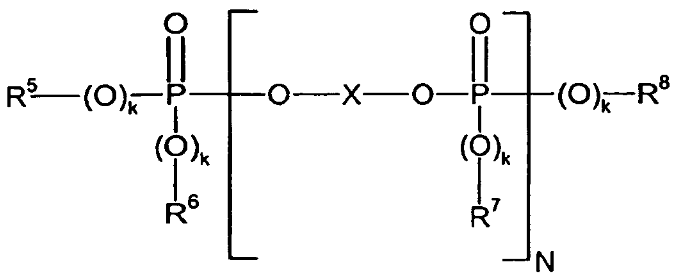

(IV),

in welcher

$R^5$, $R^6$, $R^7$ und $R^8$ unabhängig voneinander jeweils gegebenenfalls halogeniertes $C_1$-$C_8$-Alkyl, jeweils gegebenenfalls durch Alkyl, und/oder Halogen, substituiertes $C_5$-$C_6$-Cycloalkyl, $C_6$-$C_{30}$-Aryl oder $C_7$-$C_{12}$-Aralkyl bedeuten,
X einen ein- oder mehrkemigen aromatischen Rest mit 6 bis 30 C-Atomen bedeutet,
k unabhängig voneinander 0 oder 1 sein kann und
N für Werte von 0 bis 30 steht.

**9.** Verwendung der Polymerblends nach einem der Ansprüche 1 bis 8 zur Herstellung von Formkörpern.

**10.** Formkörper, insbesondere Gehäuseteile, Abdeckplatten und Teile für den Kfz-Sektor, **dadurch gekennzeichnet, dass** sie unter Verwendung von Polymerblends nach einem der Ansprüche 1 bis 8 hergestellt werden.

## Claims

**1.** Polymer blends containing

a) 60 to 65 parts by weight of a poly(ester)carbonate (A)
b) 13 to 20 parts by weight of a graft polymer (B) and
c) either 5 to 20 parts by weight of a polyethylene naphthalate (C1) or 5 to 20 parts by weight of a polyethylene naphthalate-co-terephthalate (C2)
d) 0 to 17 parts by weight of a vinyl copolymer (D), wherein the sum of the parts by weight of components A + B + C + D is 100.

**2.** Polymer blends according to claim 1, containing poly(ester)carbonate A, polyethylene naphthalate C1 or polyethylene naphthalate-co-terephthalate (C2) and graft polymer B, wherein the average particle diameter $d_{50}$ of the graft polymer is 0.5 to 5 $\mu$m.

**3.** Polymer blends according to claim 2, wherein the average particle diameter $d_{50}$ of the graft polymer is 0.5 to 2.5 $\mu$m.

**4.** Polymer blends according to either claim 2 or claim 3, wherein the average particle diameter $d_{50}$ of the graft polymer is 0.1 to 0.5 $\mu$m.

**5.** Polymer blends according to any one of claims 1 to 4, containing vinyl copolymer as component D).

**6.** Polymer blends according to any one of claims 1 to 5, **characterised in that** the grafting backbone of the graft polymer B is selected from among at least one rubber from the group of diene rubbers, EP(D)M rubbers, acrylate, polyurethane, silicone, chloroprene and ethylene/vinyl acetate rubbers.

**7.** Polymer blends according to any one of claims 1 to 6, **characterised in that** they contain at least one additive from the group of flame retardants, stabilisers, pigments, mould release agents, flow auxiliaries and/or antistatic agents.

**8.** Polymer blends according to claim 7, **characterised in that** they contain phosphates according to the formula (IV) as flame retardant

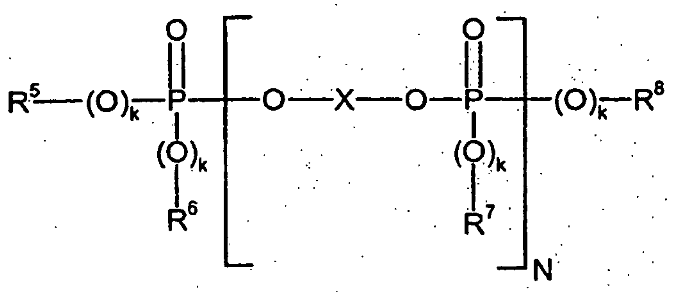

(IV),

in which

$R^5$, $R^6$, $R^7$ and $R^3$ mutually independently each mean $C_1$-$C_8$ alkyl, optionally halogenated, $C_5$-$C_6$ cycloalkyl, $C_6$-$C_{30}$ aryl or $C_7$-$C_{12}$ aralkyl each optionally substituted by alkyl and/or halogen,
X means a mono- or polycyclic aromatic residue having 6 to 30 C atoms,
k may, mutually independently, be 0 or 1 and
N denotes values from 0 to 30.

**9.** Use of the polymer blends according to any one of claims 1 to 8 for the production of mouldings.

**10.** Mouldings, in particular casing components, cladding sheets and components for the automotive sector, **charac-**

**terised in that** they are produced using polymer blends according to any one of claims 1 to 8.

**Revendications**

1. Mélanges polymères contenant

   a) de 60 à 65 parties en poids d'un poly(ester)carbonate (A)
   b) de 13 à 20 parties en poids d'un polymère greffé (B) et
   c) soit de 5 à 20 parties en poids d'un poly(éthylène naphtalate) (C1) soit de 5 à 20 parties en poids d'un poly(éthylène naphtalate-co-téréphtalate) (C2)
   d) de 0 à 17 parties en poids d'un copolymère de vinyle (D), la somme des parties en poids des constituants A + B + C + D étant égale à 100.

2. Mélanges polymères selon la revendication 1 contenant un poly(ester)carbonate A, un poly(éthylène naphtalate) C1 ou un poly(éthylène naphtalate-co-téréphtalate) (C2) et un polymère greffé (B), la taille moyenne de particules $d_{50}$ du polymère greffé étant comprise entre 0,5 et 5 $\mu$m.

3. Mélanges polymères selon la revendication 2, la taille moyenne de particules $d_{50}$ du polymère greffé étant comprise entre 0,5 et 2,5 $\mu$m.

4. Mélanges polymères selon l'une quelconque des revendications 2 ou 3, la taille moyenne de particules $d_{50}$ de la base de greffage étant comprise entre 0,1 et 0,5 $\mu$m.

5. Mélanges polymères selon l'une quelconque des revendications 1 à 4 contenant comme constituant (D) un copolymère de vinyle.

6. Mélanges polymères selon l'une quelconque des revendications 1 à 5, **caractérisés en ce que** la base de greffage du polymère greffé (B) est choisie parmi au moins un caoutchouc du groupe des caoutchoucs de diène, des caoutchoucs EP(D)M, des caoutchoucs d'acrylate, de polyuréthane, de silicone, de chloroprène et d'éthylène/acétate de vinyle.

7. Mélanges polymères selon l'une quelconque des revendications 1 à 6, **caractérisés en ce qu'**ils contiennent au moins un additif choisi parmi des agents ignifuges, des stabilisateurs, des pigments, des agents de démoulage, des auxiliaires d'écoulement et/ou des agents antistatiques.

8. Mélanges polymères selon la revendication 7, **caractérisés en ce qu'**ils contiennent comme agents ignifuges des phosphates de la formule (IV)

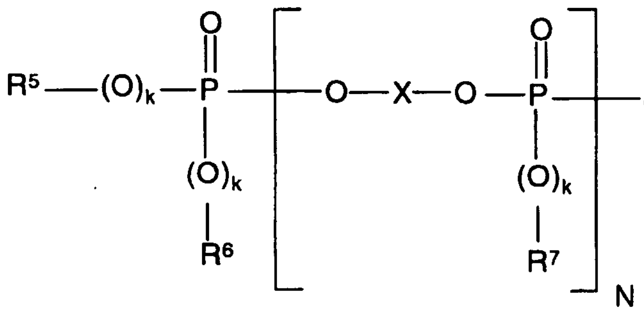

(IV),

dans laquelle

$R^5$, $R^6$, $R^7$ et $R^8$ représentent indépendamment l'un de l'autre un groupe alkyle en $C_1$-$C_8$ à chaque fois éventuellement halogéné, un groupe cycloalkyle en $C_5$-$C_6$, aryle en $C_6$-$C_{30}$ ou aralkyle en $C_7$-$C_{12}$ à chaque fois éventuellement substitué par un groupe alkyle et/ou un atome d'halogène,
X représente un reste aromatique mono ou polycyclique avec de 6 à 30 atomes de C,
k peut être indépendamment égal à 0 ou à 1 et

N représente des valeurs de 0 à 30.

**9.** Utilisation du mélange polymère selon l'une quelconque des revendications 1 à 8 pour la préparation de corps moulés.

**10.** Corps moulés, en particulier pièces de boîtier, plaques de couverture et pièces pour le secteur automobile, **caractérisés en ce qu'**ils sont préparés en utilisant des mélanges polymères selon l'une quelconque des revendications 1 à 8.